# EUROPÄISCHE PATENTSCHRIFT

(11) **EP 4 031 319 B1**
(45) Veröffentlichungstag und Bekanntmachung des Hinweises auf die Patenterteilung: **06.12.2023**
(21) Anmeldenummer: 20772008.7
(22) Anmeldetag: 08.09.2020
(51) Int. Cl.: B23K 26/144, B23K 26/146, B23K 26/70, B23K 37/00, B23K 26/342

(54) **WERKSTOFFZUFÜHRUNGSVORRICHTUNG**
STOCK FEEDING DEVICE
DISPOSITIF D'ALIMENTATION EN MATIÈRE

(30) Priorität: 16.09.2019 DE 102019124856
(43) Veröffentlichungstag der Anmeldung: 27.07.2022
(73) Patentinhaber: Fraunhofer-Gesellschaft zur Förderung der angewandten Forschung e.V., 80686 München (DE)
(72) Erfinder: KELBASSA, Jana, 52072 Aachen (DE); GASSER, Andres, 52066 Aachen (DE); EBERT, Thomas, 52223 Stolberg (DE); KOSTELNIK, Bastian, 52066 Aachen (DE)
(74) Vertreter: FARAGO Patentanwälte GmbH
(86) Internationale Anmeldenummer: PCT/EP2020/075065
(87) Internationale Veröffentlichungsnummer: WO 2021/052814

(56) Entgegenhaltungen:
- DE-A1-102016 006 247
- DE-A1-102017 215 841
- US-A1- 2017 252 865
- US-B1- 6 396 025
- WANG DI ET AL: "Characteristics of typical geometrical features shaped by selective laser melting", JOURNAL OF LASER APPLICATIONS, LASER INSTITUTE OF AMERICA, US, Bd. 29, Nr. 2, 17. April 2017 (2017-04-17) , XP012218168, ISSN: 1042-346X, DOI: 10.2351/1.4980164 [gefunden am 2017-04-17]

## Beschreibung

Die Erfindung betrifft eine Werkstoffzuführungsvorrichtung. Insbesondere betrifft die Erfindung eine Vorrichtung zur Werkstoffzufuhr für Materialbearbeitungsverfahren, beispielsweise für die Zuführung eines Zusatzwerkstoffs.

Materialbearbeitungsverfahren können beispielsweise Lasermaterialbearbeitungsverfahren sein. Bei vielen Lasermaterialbearbeitungsverfahren (z. B. Schneiden, Schweißen, Auftragsschweißen, Löten) muss Werkstoff als solcher oder als Zusatzwerkstoff in die Bearbeitungsstelle gebracht werden, um entweder zusätzliches Material bereitzustellen oder um den Prozess durch Gase zu beeinflussen.

Zu diesen Verfahren gehören u. a. Laserlöten (Hart- und Weichlöten), Kunststoffschweißen, Schweißen metallischer Werkstoffe, Aufbringen von Schichten aus Metall, Keramik oder Kunststoff, Generieren von Strukturen aus Metall, Kunststoff oder Keramik, Laserstrahlschneiden, Laserstrahlhärten, Laserstrahllegieren, Laserstrahldispergieren, um die wesentlichen zu nennen. Die Verwendung von Laserstrahlen in dem Materialbearbeitungsverfahren ist allerdings nicht zwingend erforderlich, genauso sind unter Materialbearbeitungsverfahren auch beispielsweise Lichtbogenschweißverfahren zu subsumieren.

Werkstoff als solcher muss beispielsweise bei generativen Fertigungsverfahren zugeführt werden. Hier und im Folgenden werden die Begriffe Werkstoff und Zusatzwerkstoff synonym verwendet und bezeichnet in jedem Fall an eine Bearbeitungsstelle zuzuführenden oder zugeführten Werkstoff. Der Werkstoff kann in fester oder flüssiger Form oder als Gas zugeführt werden. In fester Form liegt der Werkstoff meist als Draht oder Pulver vor.

Materialbearbeitungsvorrichtungen zur Durchführung von Materialbearbeitungsverfahren sind bekannt. Diese können mindestens eine Energieerzeugungsvorrichtung, beispielsweise einen Laser sowie Anschlüsse für Kühlmedien und Schutzgas sowie Führungsvorrichtungen für diese Medien und weiterhin eine Zuführungsvorrichtung für den der Bearbeitungsstelle zuzuführenden Werkstoff aufweisen. Solche Vorrichtungen weisen üblicherweise an ihrer der Bearbeitungsstelle zugewandten Seite einen Bearbeitungskopf mit einer düsenähnlichen Geometrie auf. Da durch die düsenähnliche Geometrie des Bearbeitungskopfes üblicherweise Schutzgas an die Bearbeitungsstelle zuführbar ist, wird dieses Teil des Bearbeitungskopfes auch Schutzgasdüse genannt. Es sind auch Materialbearbeitungsvorrichtungen bekannt, bei denen der Werkstoff von der Seite zugeführt wird. Die hierzu benötigte Anordnung ist jedoch in der Nähe der Bearbeitungsstelle aufgrund ihrer Baugröße recht störend. Außerdem wird hierdurch die Anordnung asymmetrisch, so dass bei der Verfolgung einer Kontur eines Werkstücks bei Änderung der Vorschubrichtung eine Drehung des Bearbeitungskopfes, aufweisend eine Werkstoffzuführungsvorrichtung, eine Optik zur Strahlführung und -formung, evtl. einer Kühlvorrichtung und evtl. einer Schutzgaszuführungsvorrichtung, notwendig wird. Anderenfalls ist der Bearbeitungsprozess richtungsabhängig.

Soll der Werkstoff zentral, d.h. axial zur Längsachse des Bearbeitungskopfes, zugeführt werden, muss bei Verwendung eines oder mehrerer Laserstrahlen der Laserstrahl oder die Laserstrahlen so aufgeteilt werden, dass die zentrale Achse für die Werkstoffzuführung frei wird bzw. bleibt. Das zugeführte Material muss dabei an die Bearbeitungsstelle, d.h. die Stelle, an die der Laserstrahl bzw. die Laserstrahlen auf das Substrat auftrifft bzw. auftreffen, zugeführt werden. Üblicherweise weisen entsprechende Bearbeitungsköpfe eine Düsenform auf, wobei der zugeführte Werkstoff als auch der Laserstrahl sowie evtl. zuzuführendes Schutzgas und eine eventuelle Kühlmedienführung durch den Bearbeitungskopf geleitet wird. Dabei müssen die Komponenten so ausgestaltet und der Laserstrahl bzw. die Laserstrahlen so geführt sein, dass die Strahlführung nicht beeinträchtigt, insbesondere der Strahl oder die Strahlen nicht abgeschattet werden. Aus dem deutschen Patent DE 10 2007 018 400 B4 ist ein optisches System und ein entsprechender Bearbeitungskopfbekannt, mit der der Werkstoff axial an die Bearbeitungsstelle führbar ist, während der Laserstrahl ringförmig aufgeteilt und koaxial an die Bearbeitungsstelle führbar ist.

Während der genannten Lasermaterialbearbeitungsprozesse erwärmt sich die Werkstoffzuführungsvorrichtung durch Streustrahlung aus der Optik, Wärmestrahlung aus dem Prozess und über reflektierte Laserstrahlung. Soll die Lasermaterialbearbeitung auch an schlecht zugänglichen Stellen eines Werkstücks durchgeführt werden, muss die Düse entsprechend klein ausgeführt werden. Die Begrenzung des verfügbaren Bauraums im Bearbeitungskopf führt üblicherweise dazu, dass die axiale Materialzufuhr ohne direkte Kühlung betrieben werden muss. Die Erwärmung der Werkstoffzufuhreinrichtung führt zum Prozessabbruch durch Ausfall des Systems. Längere Bearbeitungszeiten und der Einsatz höherer Laserleistungen, die bspw. für die Erhöhung der Auftragsrate erforderlich wären, sind hiermit nicht möglich. Beispielsweise tritt bei Laserleistungen kleiner 1000 W und bei Prozesszeiten größer 15 min eine Überhitzung der Werkstoffzufuhreinrichtung auf.

Zur Durchführung des Laserauftragschweißens wird heute der Prozess regelmäßig unterbrochen und es werden Abkühlzeiten eingehalten, um eine Beschädigung der Werkstoffzufuhreinrichtung und / oder eine Überhitzung der Werkstoffzuführeinrichtung und damit verbundenen Problemen bei der Werkstoffzuführung zu vermeiden. Alternativ kann der Arbeitsabstand zwischen Materialaustrittsöffnung und Bearbeitungsebene vergrößert werden, was aber zu einer ungenaueren Führung des Zusatzmaterials zum Schmelzbad und daraus resultierend zu Instabilitäten im Prozess führt. Für drahtförmige Materialien mit einem Durchmesser kleiner ca. 0,8 mm beispielsweise ist eine Vergrößerung des Arbeitsabstandes nicht erwünscht, da die genaue Führung und Positionierung des Materials zum Schmelzbad nicht mehr gewährleistet ist.

Es ist bekannt, Schweißbrenner für Lichtbogenprozesse mit einer Wasserkühlung auszustatten. Die durch die integrierte Wasserkühlung bedingten Abmessungen von ca. 25 mm Außendurchmesser und mehr lassen jedoch keine Integration in einen miniaturisierten Bearbeitungskopf mit axialer Werkstoffzufuhr zu, bzw. führen konstruktiv zu einer wesentlichen Vergrößerung des Bearbeitungskopfes mit einer deutlich verschlechterten Zugänglichkeit, was unerwünscht ist. Durch Nutzung konventioneller Fertigungsverfahren lässt sich keine Wasserkühlung in Werkstoffzufuhrdüsen mit einem Außendurchmesser von 8 mm und weniger integrieren.

Aus der deutschen Offenlegungsschrift DE10 2016 006 247 A1 ist eine Anordnung für eine Laserheizung zum Aufschmelzen von Filamenten bekannt, wobei die Laserheizung einen Druckkopf, eine axiale Bohrung zur Durchführung des Filaments und wenigstens eine Bohrung und ein Außengewinde aufweist, und wobei ein optisch transparenter Düsenkörper eine Senkung, einen Umlenkringspiegel, eine Düse und ein Innengewinde aufweist, wobei wenigstens ein Laser gleicher oder unterschiedlicher elektromagnetischer Wellenlänge und leistungssteuerbar durch die Bohrung über den Umlenkringspiegel auf das Filament geführt wird und die durch die Aufschmelzung des Filaments bedingte Infrarotstrahlung über den Umlenkringspiegel und die Bohrung auf wenigstens einen Infrarotsensor geführt wird.

Aus der deutschen Offenlegungsschrift DE10 2017 215 841 A1 ist eine eine Pulverdüse für eine Maschine zum Bearbeiten von Werkstücken und/oder zum Herstellen von Formkörpern durch ortsselektives Verfestigen von Werkstoffpulver zu zusammenhängenden Bereichen mittels eines Laserstrahls bekannt. Die Pulverdüse umfasst einen im Wesentlichen rotationssymmetrischen Grundkörper mit einer axialen Durchgangsöffnung für den Laserstrahl und Befestigungsmittel zum lösbaren Befestigen der Pulverdüse an einem Laserbearbeitungskopf der Maschine. Die Pulverdüse weist Mittel zu ihrer Kühlung auf.

Aus dem US-amerikanischen Patent US 6 396 025 B1 ist eine Pulverzufuhrdüse für Laserschweißanwendungen mit einer Düsenspitze mit mehreren Austritten zum Fokussieren eines abgegebenen Pulverstroms bekannt. Die Düsenspitze mit mehreren Auslässen verteilt mehrere Auslassströme und umfasst einen Pulverauslassauslass und mindestens einen Fokusgasauslass, der radial von dem Pulverauslassauslass beabstandet ist, um einen Pulverstrom und einen Gasstrom zu verteilen. Pulver fließt von einer Pulverquelle durch einen Pulverkanal, um einen Pulverstrom abzugeben. Fokusgas strömt durch einen relativ zum Pulverkanal abgewinkelten Fokusgaskanal, um einen Fokusgasstrom abzugeben.

Aufgabe der Erfindung ist es, eine Werkstoffzuführungsvorrichtung zur Durchführung eines Lasermaterialbearbeitungsverfahrens anzugeben, die die beschriebenen Nachteile des Stands der Technik minimiert. Eine weitere Aufgabe ist es, ein Herstellverfahren für eine solche Werkstoffzuführungsvorrichtung anzugeben.

Diese erste Aufgabe der Erfindung wird mit einer Werkstoffzuführungsvorrichtung gemäß dem unabhängigen Anspruch 1 gelöst. Vorteilhafte Weiterentwicklungen der Werkstoffzuführungsvorrichtung ergeben sich aus den Ansprüchen 2 bis 8. Die zweite Aufgabe der Erfindung wird mit einem Herstellverfahren gemäß dem nebengeordneten Anspruch 9 gelöst. Eine vorteilhafte Weiterbildung des Herstellverfahrens ergibt sich aus Anspruch 10.

Die erfinderische Werkstoffzuführungsvorrichtung zur Verwendung in einer Materialbearbeitungsvorrichtung weist einen Werkstoffzuführungskanal auf, wobei der Werkstoffzuführungskanal ein Austrittsende aufweist, das im Betrieb der Werkstoffzuführungsvorrichtung zu einer Bearbeitungsstelle weist, und ist dadurch gekennzeichnet, dass die Werkstoffzuführungsvorrichtung mindestens einen Mikrokanal aufweist, wobei der mindestens eine Mikrokanal zumindest an einer Stelle eine Wandstärke von weniger als 0,5 mm, bevorzugt weniger als 0,3 mm und besonders bevorzugt weniger als 0,2mm, aufweist und mit einer Kühlmittelversorgung verbunden ist.

Begrifflich sei dazu erläutert:
Unter einer **Werkstoffzuführungsvorrichtung** zur Verwendung in einer Materialbearbeitungsvorrichtung wird in dieser Schrift eine Vorrichtung verstanden, über die ein Werkstoff einer Bearbeitungsstelle auf einem Substrat zuführbar ist. Insbesondere ist die Werkstoffzuführungsvorrichtung in einer Materialbearbeitungsvorrichtung verwendbar, die ein Lasermaterialbearbeitungsverfahren ermöglicht.

Materialbearbeitungsvorrichtungen zur Durchführung von Materialbearbeitungsverfahren sind bekannt. Diese können mindestens eine Energieerzeugungsvorrichtung, beispielsweise einen Laser sowie Anschlüsse für Kühlmedien und Schutzgas sowie Führungsvorrichtungen für diese Medien und Strahlen und weiterhin eine Zuführungsvorrichtung für den der Bearbeitungsstelle zuzuführenden Werkstoff aufweisen. Solche Vorrichtungen weisen üblicherweise an ihrem der Bearbeitungsstelle zugewandten Seite einen Bearbeitungskopf mit einer Schutzgasdüse auf. Es sind auch Materialbearbeitungsvorrichtungen bekannt, bei denen der Werkstoff von der Seite zugeführt wird. Bei einer solchen seitlichen Zuführung weist die Zuführungsachse einen Winkel von mehr als 0° und weniger als 90° zur Achse einer Strahlführung auf.

Die hierzu benötigte Anordnung ist jedoch in der Nähe der Bearbeitungsstelle aufgrund ihrer Baugröße recht störend. Außerdem wird hierdurch die Anordnung asymmetrisch, so dass bei der Verfolgung einer Kontur eines Werkstücks bei Änderung der Vorschubrichtung eine Drehung des

Bearbeitungskopfes, aufweisend eine Werkstoffzuführungsvorrichtung, eine Optik zur Strahlführung und -formung, evtl. einer Kühlvorrichtung und evtl. einer Schutzgaszuführungsvorrichtung, notwendig wird. Anderenfalls ist der Bearbeitungsprozess richtungsabhängig.

Soll der Werkstoff zentral, d.h. axial zur Längsachse des Bearbeitungskopfes, zugeführt werden, muss bei Verwendung eines oder mehrerer Laserstrahlen der Laserstrahl oder die Laserstrahlen so aufgeteilt werden, dass die zentrale Achse für die Werkstoffzuführung frei wird. Das zugeführte Material muss dabei an die Bearbeitungsstelle, d.h. die Stelle, an die der Laserstrahl bzw. die Laserstrahlen auf das Substrat auftrifft bzw. auftreffen, zugeführt werden. Üblicherweise weisen entsprechende Bearbeitungsköpfe eine Düsenform, d.h. eine Schutzgasdüse, auf, wobei der zugeführte Werkstoff als auch der Laserstrahl sowie evtl. zuzuführendes Schutzgas und eine eventuelle Kühlmedienführung durch den Bearbeitungskopf und insbesondere die Schutzgasdüse geleitet wird. Dabei müssen die Komponenten so ausgestaltet und der Laserstrahl bzw. die Laserstrahlen so geführt sein, dass die Strahlführung nicht beeinträchtigt, insbesondere der Strahl oder die Strahlen nicht abgeschattet werden.

Der Begriff **Lasermaterialbearbeitungsverfahren** ist dabei in seiner breitesten Auslegung zu verstehen und umfasst alle Materialbearbeitungsverfahren wie beispielsweise Schneiden, Schweißen, Auftragsschweißen, Löten, bei denen ein Laserstrahl eingesetzt wird. **Laserstrahlen** sind elektromagnetische Wellen mit hoher Intensität, oft sehr engem Frequenzbereich, scharfer Bündelung des Strahls und großer Kohärenzlänge. Der **Werkstoff** kann in fester oder flüssiger Form oder als Gas zugeführt werden. In fester Form liegt der Werkstoff meist als Draht oder Pulver vor.

Unter dem Begriff **Werkstoffzuführungskanal** wird in dieser Schrift ein Kanal verstanden, durch den der Werkstoff der Bearbeitungsstelle zuführbar ist. Der Werkstoffzuführungskanal kann einen beliebigen Querschnitt, auch einen Ringquerschnitt, aufweisen.

Unter dem Begriff **optischen Kanal** wird in dieser Schrift insbesondere ein Kanal verstanden, durch den ein Laserstrahl der Bearbeitungsstelle zuführbar ist. Der optische Kanal kann einen beliebigen Querschnitt, auch einen Ringquerschnitt aufweisen.

Die **Bearbeitungsstelle** ist diejenige Stelle auf dem Substrat, an der die Bearbeitung durchgeführt wird. Die Bearbeitungsstelle kann dabei punktförmig sein oder einen Bereich darstellen.

Unter einem **Mikrokanal** soll in dieser Schrift ein rohrförmiger Kanal mit einem sehr kleinen Querschnitt, beispielsweise von 10⁻² mm², verstanden werden. Der Mikrokanal kann teilweise oder komplett ring-, ellipsen-, vieleck-, spiral- oder auch geradförmig verlaufen. In dieser Schrift wird auch der Plural, **Mikrokanäle,** verwendet, wobei hiervon sowohl verschiedene, nicht miteinander verbundene Mikrokanäle, als auch verschiedene, miteinander verbundene Mikrokanäle oder auch verschiedene Windungen eines spiralförmigen Mikrokanals umfasst sein sollen. Der Mikrokanal kann auch als doppelwandiger Kanal, beispielsweise in Form eines Kanals in einem Kanal und / oder als spiralförmiger Kanal ausgeführt sein.

Der mindestens eine Mikrokanal weist zumindest an einer Stelle eine Wandstärke von weniger als 0,5 mm, bevorzugt weniger als 0,3 mm und besonders bevorzugt weniger als 0,2 mm, auf. Der Mikrokanal ist durch eine Wand begrenzt. Diese Wand kann bestehen zur Außenseite der Werkstoffzuführungsvorrichtung oder zu einem weiteren Kanal. Dieser weitere Kanal kann ein weiterer Mikrokanal, ein Werkstoffzuführungskanal oder ein optischer Kanal sein. Unter dem weiteren Mikrokanal ist auch beispielsweise eine weitere Windung eines spiralförmigen Mikrokanals zu verstehen.

Durch die geringe Wandstärke des Mikrokanals ist eine sehr kleine Bauform der Werkstoffzuführungsvorrichtung möglich, bei der dennoch beispielsweise eine Temperierung realisiert ist.

Weiter ist der mindestens eine Mikrokanal mit einer Kühlmittelversorgung verbunden. Die Kühlmittelversorgung kann beispielsweise eine Pumpe mit einem Temperiergerät sein, so dass für eine effektive Temperierung ein Temperiermedium, beispielsweise Wasser oder Temperieröl, mit einer definierten Temperatur und einem definierten Volumenstrom und/oder Druck durch den mindestens einen Mikrokanal gefördert werden kann.

In einer besonders bevorzugten Ausführungsform weist der mindestens eine Mikrokanal eine in ihm eingebaute Stütze auf. Die Stütze kann dabei für eine Turbulenz bzw. eine Erhöhung der Turbulenz im den Mikrokanal durchströmenden Temperiermedium und damit für eine optimierte Wärmeübertragung sorgen. Darüber hinaus kann die Stütze auch zur mechanischen Stabilität des Mikrokanals und der Werkstoffzuführungsvorrichtung beitragen.

Hierbei hat es sich als besonders bevorzugt erwiesen, wenn der mindestens eine Mikrokühlkanal einen Temperiermittelvorlauf und einen Temperiermittelrücklauf sicherstellt. Hierdurch wird die Effektivität der Temperierung der Werkstoffzuführungsvorrichtung erhöht.

In einer weiteren vorteilhaften Ausführungsform weist die Werkstoffzuführungsvorrichtung einen Bereich mit einem Gewinde zur Aufnahme und Fixierung einer Düsenspitze auf, wobei die Werkstoffzuführungsvorrichtung zumindest bis auf den Bereich des Gewindes mit Mikrokanälen durchzogen ist. Durch die Ausdehnung des mit Mikrokanälen durchzogenen Bereichs der Werkstoffzuführungsvorrichtung wird die Temperierung der Werkstoffzuführungsvorrichtung optimiert. Durch das Gewinde kann die verschleißbehaftete Düsenspitze leicht ausgetauscht werden.

In einer weiteren vorteilhaften Ausführungsform ist in mindestens einem Mikrokanal ein Messsensor vorgesehen. Die Mikrokanäle können nicht nur der Durchströmung mit einem Temperiermedium dienen, sondern in ihnen können auch Messsensoren eingebracht werden. Solche Messsensoren können beispielsweise Temperatursensoren zur Temperaturüberwachung der Materialzufuhr, Lichtleitfasern zur Erfassung der Schmelzbadtemperatur und/oder zur Prozessregelung, Sensoren für eine Abstandsmessung, beispielsweise eine Lichtleitfaser für OCT (Optische Kohärenztomografie, ein bildgebendes Verfahren, um 2- und 3-dimensionale Aufnahmen aus streuenden Materialien in Mikrometerauflösung zu erhalten), oder Messsensoren zur Überwachung der Förderung der Materialzufuhr sein. Durch das Einbringen solcher Messsensoren können Prozessparameter sehr nah an interessierende Stellen im Inneren der Werkstoffzuführungsvorrichtung und/oder sehr nah an der Bearbeitungsstelle aufgenommen werden, ohne die Baugröße der Werkstoffzuführungsvorrichtung wesentlich zu verändern.

Zusätzlich oder alternativ kann in mindestens einem Mikrokanal eine Zusatzmaterialbeeinflussungsvorrichtung vorgesehen sein. Eine solche Zusatzmaterialbeeinflussungsvorrichtung kann beispielsweise eine Vorrichtung zur Vorwärmung des Zusatzmaterials, beispielsweise eine induktive Vorwärmeinrichtung, sein. Durch eine Vorwärmung des zuzuführenden Werkstoffs kann beispielsweise die Auftragsrate von Werkstoff, beispielsweise von Zusatzmaterial, erhöht werden. Durch das Einbringen einer Werkstoffbeeinflussungsvorrichtung in einen Mikrokanal kann die Zusatzmaterialbeeinflussungsvorrichtung beispielsweise sehr nah an den Werkstoffzuführungskanal, insbesondere sehr nah an den Werkstoffzuführungskanal und sehr nah an die Bearbeitungsstelle gebracht werden, so dass sehr gezielt und sehr genau das Zusatzmaterial beeinflussbar ist.

Es hat sich als vorteilhaft erwiesen, wenn das Herstellverfahren für die Werkstoffzuführungsvorrichtung aus der Verfahrensklasse der additiven Fertigungsverfahren stammt. Additive Fertigung bezeichnet einen Prozess, bei dem auf der Basis von digitalen 3D-Konstruktionsdaten durch das Ablagern von Material schichtweise ein Bauteil aufgebaut wird. Der Begriff "3D-Druck" wird heute vielfach als Synonym für die Additive Fertigung verwendet. Additive Fertigung beschreibt jedoch besser, dass sich das Verfahren deutlich von konventionellen, abtragenden Fertigungsmethoden unterscheidet. Anstatt zum Beispiel ein Werkstück aus einem festen Block heraus zu fräsen, baut die Additive Fertigung Bauteile Schicht für Schicht aus Werkstoffen auf, die beispielsweise als feines Pulver oder Draht vorliegen. Als Materialien sind unterschiedliche Metalle, Kunststoffe und Verbundwerkstoffe verfügbar. Durch den schichtweisen Aufbau der Werkstoffzuführungsvorrichtung lassen sich Geometrien, insbesondere Mikrokanäle, herstellen, die mit konventionellen Fertigungsverfahren nicht oder wenn überhaupt nur mit großem Aufwand herstellen lassen.

Als besonders vorteilhafte Technologie für das Herstellverfahren hat sich die Laser-Powder-Bed-Fusion-(LPBF-)Technologie erwiesen. Bei der LPBF-Technologie wird der zu verarbeitende Werkstoff in Pulverform in einer dünnen Schicht auf einer Grundplatte aufgebracht. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird solange wiederholt, bis alle Schichten umgeschmolzen sind. Das fertige Bauteil wird vom überschüssigen Pulver gereinigt, nach Bedarf bearbeitet oder sofort verwendet. Die für den Aufbau des Bauteils typischen Schichtstärken bewegen sich für alle Materialien zwischen 15 und 500 µm. Die Daten für die Führung des Laserstrahls werden mittels einer Software aus einem 3D-CAD-Körper erzeugt. Im ersten Berechnungsschritt wird das Bauteil in einzelne Schichten unterteilt. Im zweiten Berechnungsschritt werden für jede Schicht die Bahnen erzeugt, die der Laserstrahl abfährt. Um die Kontaminierung des Werkstoffs mit Sauerstoff zu vermeiden, findet der Prozess üblicherweise unter Schutzgasatmosphäre mit Argon oder Stickstoff statt. Durch LPBF gefertigte Bauteile zeichnen sich durch große spezifische Dichten > 99 % aus. Dies gewährleistet, dass die mechanischen Eigenschaften des generativ hergestellten Bauteils weitgehend denen des Grundwerkstoffs entsprechen.

Ausdrücklich sei darauf hingewiesen, dass alle angegebenen Zahlenwerte nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Es zeigen:
- **Fig. 1**: einen Bearbeitungskopf einer Materialbearbeitungsvorrichtung,
- **Fig. 2**: eine erfindungsgemäße Werkstoffzuführungsvorrichtung in einer dreidimensionalen Darstellung,
- **Fig. 3**: eine Ausführungsform einer erfindungsgemäßen Werkstoffzuführungsvorrichtung im Längsschnitt,
- **Fig. 4**: eine weitere Ausführungsform einer erfindungsgemäßen Werkstoffzuführungsvorrichtung im Längsschnitt,
- **Fig. 5**: eine Ausschnittvergrößerung er erfindungsgemäßen Werkstoffzuführungsvorrichtung aus Fig. 4.

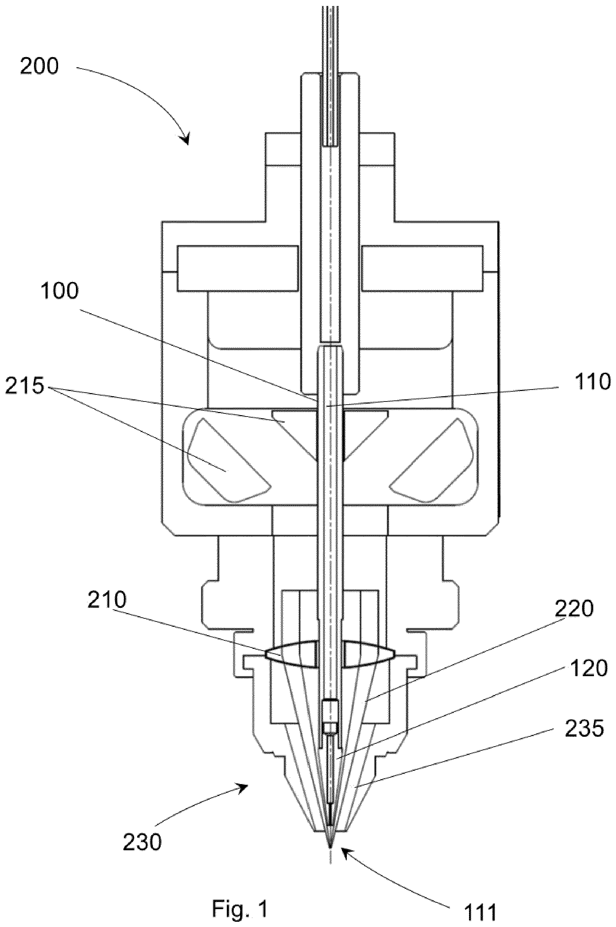

**Fig. 1** zeigt einen Bearbeitungskopf 200 einer Materialbearbeitungsvorrichtung. Der Bearbeitungskopf 200 weist eine erfindungsgemäße Werkstoffzuführungsvorrichtung 100 mit einem Werkstoffkanal 110 auf. Die erfinderische Werkstoffzuführungsvorrichtung zur Verwendung in einer Materialbearbeitungsvorrichtung weist einen Werkstoffzuführungskanal 100 auf, wobei der Werkstoffzuführungskanal 100 ein Austrittsende 111 aufweist, das im Betrieb der Werkstoffzuführungsvorrichtung 100 zu einer Bearbeitungsstelle weist. Über die Werkstoffzuführungsvorrichtung 100 ist ein Werkstoff einer Bearbeitungsstelle auf einem Substrat zuführbar. Die Materialbearbeitungsvorrichtung dient der Durchführung von Materialbearbeitungsverfahren, beispielsweise einem Laserschweißverfahren. Der Bearbeitungskopf 200 weist eine Führungsvorrichtung für Laserstrahlen auf. Diese Führungsvorrichtung weist Umlenkeinrichtungen 215 für Laserstrahlen, beispielsweise Spiegel und/oder Prismen, eine Fokussierlinse 210 und weiterhin eine Schutzgasdüse 230 mit einem Schutzgaskanal 235 auf. Durch den Schutzgaskanal 235 wird Schutzgas der Bearbeitungsstelle zugeführt. Das Schutzgas verhindert eine Verzunderung des im Moment der Bearbeitung heißen Substrats bzw.

zugeführten Werkstoffs, indem es die Bearbeitungsstelle temporäre vom Sauerstoffkontakt abschirmt. In der gezeigten Ausführungsform wird Werkstoff zentral, d.h. axial zur Längsachse des Bearbeitungskopfes 200, der Bearbeitungsstelle zugeführt. Dazu muss bei Verwendung eines oder mehrerer Laserstrahlen der Laserstrahl oder die Laserstrahlen so aufgeteilt werden, dass die zentrale Achse für die Werkstoffzuführung frei wird bzw. bleibt. Dabei müssen alle Komponenten n dem Bearbeitungskopf, also insbesondere auch die Werstoffzuführungsvorrichtung 100 so ausgestaltet und der Laserstrahl bzw. die Laserstrahlen in einem optischem Kanal 220, in der gezeigten Ausführungsform in einem Laserstrahlring 220 so geführt sein, dass die Strahlführung nicht beeinträchtigt, insbesondere der Strahl oder die Strahlen nicht abgeschattet werden. Der Werkstoffzuführungskanal 110 weist an seinem der Bearbeitungsstelle gegenüberliegendem Ende eine austauschbare Werkstoffdüse (nicht gezeigt) auf. Diese Werkstoffdüse kann beispielsweise in den Werkstoffzuführungskanal 110 eingeschraubt sein. Im Betrieb tritt an dem der Bearbeitungsstelle gegenüberliegendem Ende des Werkstoffzuführungskanals 110 Verschleiß, u.a. durch die thermische Belastung, der dieses Ende des Werkstoffzuführungskanals 110 im Betrieb des Bearbeitungskopfes 200 ausgesetzt ist, auf. Durch die austauschbare Werkstoffdüse kann diese einfach ausgetauscht werden, wenn der Verschleiß eine kritische Grenze überschreitet. Der Werkstoff kann in fester oder flüssiger Form oder als Gas zugeführt werden. In fester Form liegt der Werkstoff meist als Draht oder Pulver vor. Beispielsweise bei der Zuführung von drahtförmigen Werkstoff kann sich der Verschleiß durch eine Vergrößerung des Durchmessers des Werstoffzuführungskanals 110 an dem Austrittsende 111 bemerkbar machen, wodurch die Genauigkeit der Drahtführung beeinträchtigt wird.

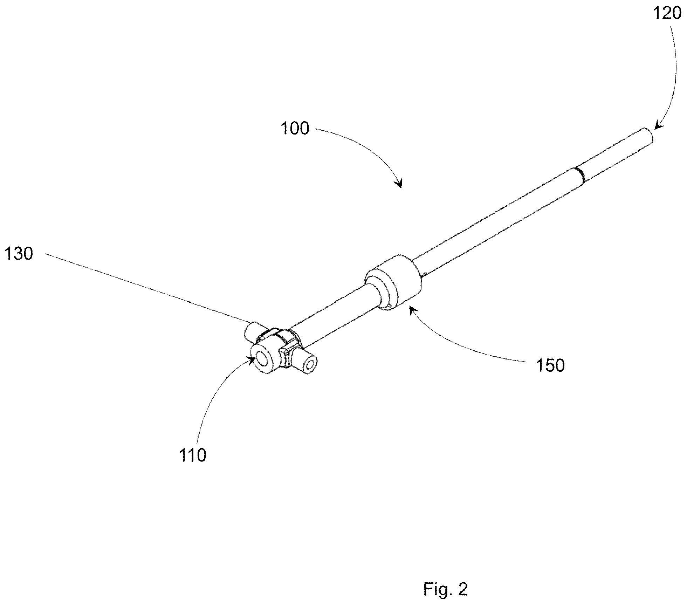

**Fig. 2** zeigt eine erfindungsgemäße Werkstoffzuführungsvorrichtung 100 in einer dreidimensionalen Darstellung. Die Werkstoffzuführungsvorrichtung 100 weist einen durchgehenden Werkstoffzuführungskanal 110 auf, durch den der Werkstoff der Bearbeitungsstelle zugeführt wird. Weiterhin weist die Werkstoffzuführungsvorrichtung 100 Medienanschlüsse 130 auf. Über diese Medienanschlüsse 130 kann beispielsweise ein Kühlmedium, beispielsweise Wasser, in die Werkstoffzuführungsvorrichtung 100 eingeleitet bzw. wieder ausgeleitet werden. Dabei befinden sich die Medienanschlüsse 130 an dem im Betrieb des Bearbeitungskopfes 200 der Bearbeitungsstelle gegenüberliegenden Ende der Werkstoffzuführungsvorrichtung 100. Weiterhin weist die Werkstoffzuführungsvorrichtung 100 einen Anschluss 120 für eine Werkstoffdüse (nicht gezeigt) auf, die im Betrieb des Bearbeitungskopfes 200 an dem zu der Bearbeitungsstelle hinweisenden Ende der Werkstoffzuführungsvorrichtung 100 einschraubbar angeordnet ist. Weiterhin ist in der Figur ein Verbindungstück 150 zu erkennen, an dem die aus Fertigungsgründen zweiteilig ausgeführte Werkstoffzuführungsvorrichtung 100 verbunden ist. Die Werkstoffzuführungsvorrichtung 100 ist mittels eines additiven Fertigungsverfahrens hergestellt. Ist die additive Fertigungsanlage in der Größe der herzustellenden Teile limitiert, so kann die die Werkstoffzuführungsvorrichtung 100 in zwei oder mehreren Teilen gefertigt und für den Betrieb an einem oder mehreren Verbindungsstücken 150 zusammengesetzt werden. Die Werkstoffzuführungsvorrichtung 100 kann aber auch einteilig hergestellt werden, sofern eine entsprechende additive Fertigungsanlage zur Verfügung steht.

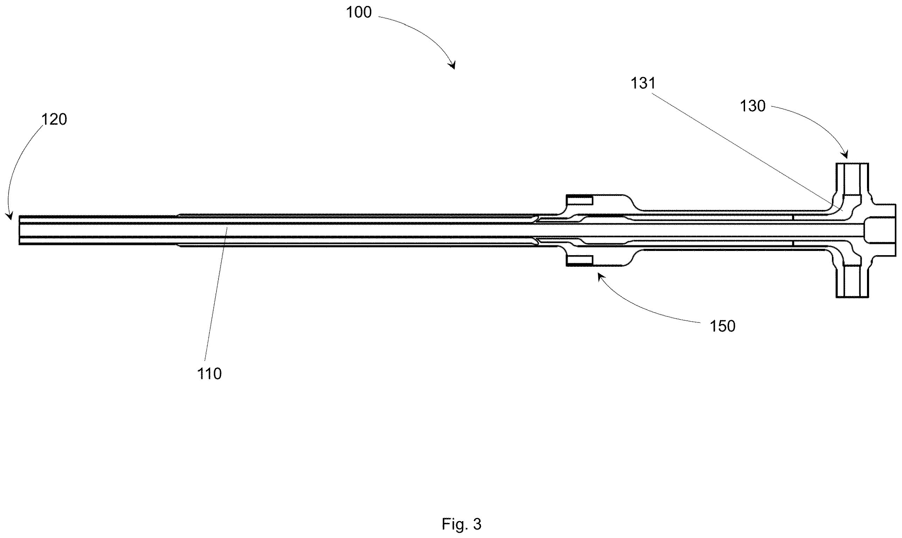

**Fig. 3** zeigt eine Ausführungsform einer erfindungsgemäßen Werkstoffzuführungsvorrichtung 100 im Längsschnitt. Wie in Fig. 2 sind Medienanschlüsse 130 und der Anschluss 120 für die Werkstoffdüse zu sehen, wobei auf die Darstellung des Einschraubgewindes aus Übersichtsgründen in der Figur verzichtet wurde. Die Werkstoffzuführungsvorrichtung 100 weist einen durchgehenden Werkstoffzuführungskanal 110 auf. Weiterhin weist die Werkstoffzuführungsvorrichtung 100 mehrere Medienkanäle 131 auf, die mit den Medienanschlüssen 130 wirkverbunden sind. Beispielsweise kann ein Kühlmedium, wie beispielsweise Wasser, durch einen Medienanschluss 130 in einen Medienkanal 131 eingeleitet werden. Die Medienkanäle 131 sind als Mikrokanäle 131, d.h. als rohrförmige Kanäle mit einem sehr kleinen Querschnitt, beispielsweise von 10⁻² mm², ausgeführt. Ein Mikrokanal 131 kann teilweise oder komplett ring-, ellipsen-, vieleck-, spiral- oder auch geradförmig verlaufen. Mehrere Mikrokanäle 131 können sowohl verschiedene, nicht miteinander verbundene Mikrokanäle 131, als auch verschiedene, miteinander verbundene Mikrokanäle 131 oder auch verschiedene Windungen eines spiralförmigen Mikrokanals 131 umfassen. Ein Mikrokanal 131 kann auch als doppelwandiger Kanal, beispielsweise in Form eines Kanals in einem Kanal und / oder als spiralförmiger Kanal ausgeführt sein. Der Mikrokanal 131 ist durch eine Wand begrenzt. Diese Wand kann bestehen zur Außenseite der Werkstoffzuführungsvorrichtung 100 oder zu einem weiteren Kanal. Dieser weitere Kanal kann ein weiterer Mikrokanal 131, ein Werkstoffzuführungskanal 110 oder ein optischer Kanal 220 sein. Unter dem weiteren Mikrokanal 131 ist auch beispielsweise eine weitere Windung eines spiralförmigen Mikrokanals 131 zu verstehen. Jeder Mikrokanal 131 kann zumindest an einer Stelle eine Wandstärke von weniger als 0,5 mm, bevorzugt weniger als 0,3 mm und besonders bevorzugt weniger als 0,2mm, aufweisen. Durch die geringe Wandstärke des Mikrokanals 131 ist eine sehr kleine Bauform der Werkstoffzuführungsvorrichtung 100 möglich, bei der dennoch beispielsweise eine Temperierung realisiert ist. Die Werkstoffzuführungsvorrichtung 100 ist zumindest bis auf den Bereich des Gewindes zum Einschrauben der Werkstoffdüse (in der Figur nicht gezeigt) mit Mikrokanälen 131 durchzogen. Durch die Ausdehnung des mit Mikrokanälen 131 durchzogenen Bereichs der Werkstoffzuführungsvorrichtung 100 wird die Temperierung der Werkstoffzuführungsvorrichtung 100 optimiert. Weiterhin ist es auch möglich, in einen oder mehreren Mikrokanäle 131 Messsensorik in die Werkstoffzuführungsvorrichtung 100 nahe an den Werkstoffzuführungskanal 110 einzubringen. Solche Messsensoren können beispielsweise Temperatursensoren zur Temperaturüberwachung der Materialzufuhr, Lichtleitfasern zur Erfassung der Schmelzbadtemperatur und/oder zur Prozessregelung, Sensoren für eine Abstandsmessung, beispielsweise eine Lichtleitfaser für OCT (Optische Kohärenztomografie, ein bildgebendes Verfahren, um 2- und 3-dimensionale Aufnahmen aus streuenden Materialien in Mikrometerauflösung zu erhalten), oder Messsensoren zur Überwachung der Förderung der Materialzufuhr sein. Durch das Einbringen solcher Messsensoren können Prozessparameter sehr nah an interessierende Stellen im Inneren der Werkstoffzuführungsvorrichtung 100 und/oder sehr nah an der Bearbeitungsstelle aufgenommen werden, ohne die Baugröße der Werkstoffzuführungsvorrichtung 100 wesentlich zu verändern.

Zusätzlich oder alternativ kann in mindestens einem Mikrokanal 131 eine Zusatzmaterialbeeinflussungsvorrichtung vorgesehen sein. Eine solche Zusatzmaterialbeeinflussungsvorrichtung kann beispielsweise eine Vorrichtung zur Vorwärmung des Zusatzmaterials, beispielsweise eine induktive Vorwärmeinrichtung, sein. Durch eine Vorwärmung des zuzuführenden Werkstoffs kann beispielsweise die Auftragsrate von Werkstoff, beispielsweise von Zusatzmaterial, erhöht werden. Durch das Einbringen einer Werkstoffbeeinflussungsvorrichtung in einen Mikrokanal 131 kann die Zusatzmaterialbeeinflussungsvorrichtung beispielsweise sehr nah an den Werkstoffzuführungskanal 110, insbesondere sehr nah an den Werkstoffzuführungskanal 110 und sehr nah an die Bearbeitungsstelle gebracht werden, so dass sehr gezielt und sehr genau das Zusatzmaterial beeinflussbar ist.

Die Werkstoffzuführungsvorrichtung 100 ist mittels eines additiven Fertigungsverfahrens hergestellt. Durch den schichtweisen Aufbau der Werkstoffzuführungsvorrichtung 100 lassen sich Geometrien wie insbesondere die beschriebenen Mikrokanäle 100 herstellen, die sich mit konventionellen Fertigungsverfahren nicht oder wenn überhaupt nur mit großem Aufwand herstellen lassen.

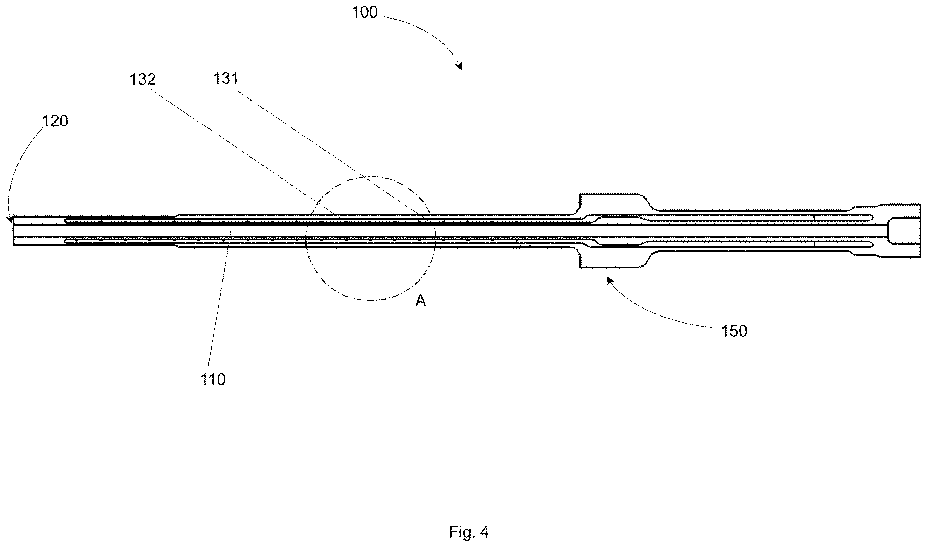

Fig. 4 zeigt eine weitere Ausführungsform einer erfindungsgemäßen Werkstoffzuführungsvorrichtung 100 im Längsschnitt. Der Mikrokanal 131 weist eine in ihm eingebaute Stütze 132 bzw. eine Vielzahl solcher Stützen 132 auf. Die Stütze 132 kann dabei für eine Turbulenz bzw. eine Erhöhung der Turbulenz im den Mikrokanal 131 durchströmenden Temperiermedium und damit für eine optimierte Wärmeübertragung sorgen. Darüber hinaus kann die Stütze 132 auch zur mechanischen Stabilität des Mikrokanals 131 und der Werkstoffzuführungsvorrichtung 100 beitragen.

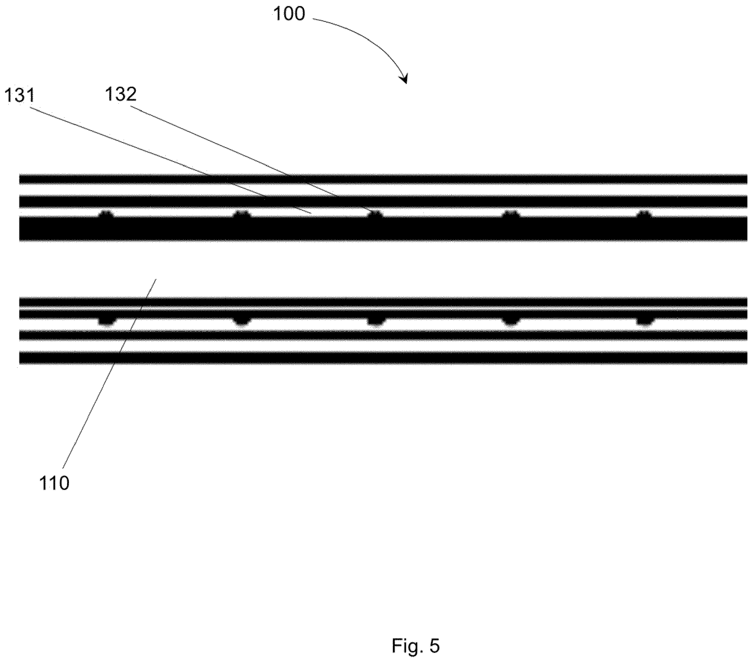

Fig. 5 zeigt eine Ausschnittvergrößerung er erfindungsgemäßen Werkstoffzuführungsvorrichtung 100 aus Fig. 4. In dieser Ausschnittvergrößerung sind die Stützen 132 besser zu erkennen. Die Stützen 132 sind auf der Innenseite, d.h. der dem Werkstoffzuführungskanal 110 zugewandten Seite des Mikrokanals 131, aufgebracht. Die Stützen 132 können aber auch an jeder anderen Stelle innerhalb des Mikrokanals 131 angeordnet sein.

Die hier gezeigten Ausführungsformen stellen nur Beispiele dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 100: Werkstoffzuführungsvorrichtung
- 110: Werkstoffzuführungskanal
- 111: Austrittsende
- 120: Anschluss für eine Werkstoffdüse
- 130: Medienanschluss
- 131: Medienkanal, Mikrokanal
- 132: Stütze
- 150: Verbindungsstück
- 200: Bearbeitungskopf
- 210: Fokussierlinse
- 215: Umlenkeinrichtung
- 220: Optischer Kanal, Laserstrahlring
- 230: Schutzgasdüse
- 235: Schutzgaskanal

## Patentansprüche

1. Werkstoffzuführungsvorrichtung (100) zur Verwendung in einer Materialbearbeitungsvorrichtung, wobei die Werkstoffzuführungsvorrichtung (100) mindestens einen Werkstoffzuführungskanal (110) aufweist, wobei der Werkstoffzuführungskanal (110) ein Austrittsende (111) aufweist, das im Betrieb der Werkstoffzuführungsvorrichtung (100) zu einer Bearbeitungsstelle weist,
**dadurch gekennzeichnet,**
**dass** die Werkstoffzuführungsvorrichtung (100) mindestens einen Mikrokanal (110) aufweist, wobei der mindestens eine Mikrokanal (110) zumindest an einer Stelle eine Wandstärke von weniger als 0,5 mm, bevorzugt weniger als 0,3 mm und besonders bevorzugt weniger als 0,2mm, aufweist und mit einer Kühlmittelversorgung verbunden ist.

2. Werkstoffzuführungsvorrichtung (100) gemäß Anspruch 1,
**dadurch gekennzeichnet,**
**dass** die Werkstoffzuführungsvorrichtung (100) einen zentralen Werkstoffzuführungskanal (110) aufweist.

3. Werkstoffzuführungsvorrichtung (100) gemäß Anspruch 1,
**dadurch gekennzeichnet,**
**dass** die Werkstoffzuführungsvorrichtung (100) einen Werkstoffzuführungskanal (110) aufweist, der seitlich mit einem Winkel größer 0° und kleiner 90° zur Achse einer Strahlführung angeordnet ist.

4. Werkstoffzuführungsvorrichtung (100) gemäß einem der vorherigen Ansprüche,
**dadurch gekennzeichnet,**
**dass** der mindestens eine Mikrokanal (110) eine in ihm eingebaute Stütze (132) aufweist.

5. Werkstoffzuführungsvorrichtung (100) gemäß einem der vorhergien Ansprüche,
**dadurch gekennzeichnet,**
**dass** der mindestens eine Mikrokühlkanal (110) einen Temperiermittelvorlauf und einen Temperiermittelrücklauf sicherstellt.

6. Werkstoffzuführungsvorrichtung (100) gemäß einem der vorherigen Ansprüche,
**dadurch gekennzeichnet,**
**dass** die Werkstoffzuführungsvorrichtung (100) einen Bereich mit einem Gewinde zur Aufnahme und Fixierung einer Düsenspitze aufweist, wobei die Werkstoffzuführungsvorrichtung (100) zumindest bis auf den Bereich des Gewindes mit Mikrokanälen (110) durchzogen ist.

7. Werkstoffzuführungsvorrichtung (100) gemäß einem der vorherigen Ansprüche,
**dadurch gekennzeichnet,**
**dass** in mindestens einem Mikrokanal (110) ein Messsensor vorgesehen ist.

8. Werkstoffzuführungsvorrichtung (100) gemäß einem der vorherigen Ansprüche,
**dadurch gekennzeichnet,**
**dass** in mindestens einem Mikrokanal (110) eine Werkstoffbeeinflussungsvorrichtung vorgesehen ist.

9. Herstellverfahren zur Herstellung einer Werkstoffzuführungsvorrichtung (100) gemäß einem der vorherigen Ansprüche,
**dadurch gekennzeichnet,**
**dass** das Herstellverfahren aus der Verfahrensklasse der additiven Fertigungsverfahren stammt.

10. Herstellverfahren gemäß Anspruch 9,
**dadurch gekennzeichnet,**
**dass** das Herstellverfahren die Laser-Powder-Bed-Fusion-Technologie nutzt.

## Claims

1. Material feeding device (100) to be used in a material processing device, the material feeding device (100) having at least one material feeding channel (110), the material feeding channel (110) having an output end (111) facing a processing site during operation of the material feeding device (100),
**characterized in that**
the material feeding device (100) has at least one microchannel (110), the at least one microchannel (110) having, at least in one place, a wall thickness of less than 0.5 mm, preferably less than 0.3 mm and particularly preferably less than 0.2 mm and being connected to a coolant supply.

2. Material feeding device (100) according to Claim 1,
**characterized in that**
the material feeding device (100) has a central material feeding channel (110).

3. Material feeding device (100) according to Claim 1,
**characterized in that**
the material feeding device (100) has a material feeding channel (110) arranged laterally at an angle larger than 0° and smaller than 90° to the axis of a beam guide.

4. Material feeding device (100) according to one of the above Claims,
**characterized in that**
the at least one microchannel (110) has an integrated support (132).

5. Material feeding device (100) according to one of the above Claims,
**characterized in that**
the at least one micro-cooling channel (110) ensures a temperature control medium forward flow and a temperature control medium return flow.

6. Material feeding device (100) according to one of the above Claims,
**characterized in that**
the material feeding device (100) has an area with a thread for receiving and fixing a nozzle tip into place, with microchannels (110) cutting through the material feeding device (100) at least except for the thread area.

7. Material feeding device (100) according to one of the above Claims,
**characterized in that**
a measurement sensor is provided in at least one microchannel (110).

8. Material feeding device (100) according to one of the above Claims,
**characterized in that**
a material influencing device is provided in at least one microchannel (110).

9. Manufacturing method for a material feeding device (100) according to one of the above Claims,
**characterized in that**
the manufacturing method is from the method class of additive manufacturing methods.

10. Manufacturing method according to Claim 9,
**characterized in that**
the manufacturing method uses laser powder bed fusion technology.

## Revendications

1. Dispositif d'alimentation en matière (100) destiné à être utilisé dans un dispositif d'usinage de matière, dans lequel le dispositif d'alimentation en matière (100) comporte au moins un canal d'alimentation en matière (110), dans lequel le canal d'alimentation en matière (110) présente une extrémité de sortie (111) qui, lors du fonctionnement du dispositif d'alimentation en matière (100), est dirigée vers un point d'usinage,
**caractérisé en ce que,**
le dispositif d'alimentation en matière (100) comporte au moins un microcanal (110), dans lequel ledit au moins un microcanal (110) présente au moins à un endroit une épaisseur de paroi inférieure à 0,5 mm, de préférence inférieure à 0,3 mm et de façon particulièrement préférentielle inférieure à 0,2 mm, et est raccordé à une alimentation de refroidissement.

2. Dispositif d'alimentation en matière (100) selon la revendication 1,
**caractérisé en ce que,**
le dispositif d'alimentation en matière (100) comporte un canal central d'alimentation en matière (110).

3. Dispositif d'alimentation en matière (100) selon la revendication 1,
**caractérisé en ce que,**
le dispositif d'alimentation en matière (100) comporte un canal d'alimentation en matière (110) qui est agencé latéralement à un angle supérieur à 0° et inférieur à 90° par rapport à l'axe d'un guidage de faisceau.

4. Dispositif d'alimentation en matière (100) selon l'une quelconque des revendications précédentes,
**caractérisé en ce que,**
ledit au moins un microcanal (110) présente un montant intégré (132).

5. Dispositif d'alimentation en matière (100) selon l'une quelconque des revendications précédentes,
**caractérisé en ce que,**
ledit au moins un microcanal de refroidissement (110) assure un aller et retour d'agent de régulation de température.

6. Dispositif d'alimentation en matière (100) selon l'une quelconque des revendications précédentes,
**caractérisé en ce que,**
le dispositif d'alimentation en matière (100) comporte une zone pourvue d'un filetage destiné à recevoir et à fixer une pointe de buse, dans lequel le dispositif d'alimentation en matière (100) est parcouru de microcanaux (110) au moins jusqu'à la zone du filetage.

7. Dispositif d'alimentation en matière (100) selon l'une quelconque des revendications précédentes,
**caractérisé en ce que,**
un capteur de mesure est prévu dans au moins un microcanal (110).

8. Dispositif d'alimentation en matière (100) selon l'une quelconque des revendications précédentes,
**caractérisé en ce que,**
un dispositif d'influence de matière est prévu dans au moins un microcanal (110).

9. Procédé de fabrication pour un dispositif d'alimentation en matière (100) selon l'une quelconque des revendications précédentes,
**caractérisé en ce que,**
le procédé de fabrication est issu de la classe de procédé des procédés de fabrication additifs.

10. Procédé de fabrication selon la revendication 9,
**caractérisé en ce que,**
le procédé de fabrication utilise la technologie de fusion de lit de poudre laser.
